# EUROPÄISCHE PATENTSCHRIFT

(11) **EP 3 805 133 B1**
(45) Veröffentlichungstag und Bekanntmachung des Hinweises auf die Patenterteilung: **20.07.2022**
(21) Anmeldenummer: 20200750.6
(22) Anmeldetag: 08.10.2020
(51) Int. Cl.: B65G 47/64

(54) **SORTIERVORRICHTUNG**
SORTING DEVICE
DISPOSITIF DE TRI

(30) Priorität: 09.10.2019 DE 102019127189
(43) Veröffentlichungstag der Anmeldung: 14.04.2021
(73) Patentinhaber: WIPOTEC GmbH, 67657 Kaiserslautern (DE)
(72) Erfinder: Berger, Hermann, 31195 Lamspringe (DE); Stumpf, Eugen, 30900 Wedemark (DE); Janzen, Sergej, 30926 Seelze (DE); Höhler, Hans-Sebastian, 31141 Hildesheimer (DE); Hoffmeister, Louis, 31167 Bockenem (DE); Müller, Moritz, 30629 Hannover (DE)
(74) Vertreter: Eder Schieschke & Partner mbB

(56) Entgegenhaltungen:
- EP-A1- 1 256 529
- DE-A1- 2 108 023
- DE-A1- 10 112 333
- JP-A- S 594 480
- JP-A- 2009 137 690

## Beschreibung

Die vorliegende Erfindung betrifft eine Sortiervorrichtung zum Ausschleusen von Produkten aus einem Förderstrom.

In der industriellen Massenfertigung werden hergestellte Güter während und auch am Ende der Produktion verschiedenen Qualitätskontrollen unterworfen. Nichtkonforme Produkte werden aus dem Produktstrom aussortiert und einer Sonderbehandlung zugeführt oder verschrottet bzw. entsorgt. Auch während des Verbringens der produzierten Güter zum Endverbraucher, also innerhalb einer Handelskette, werden Qualitätsprüfungen ausgeführt und nichtkonforme Produkte aussortiert. Zum Beispiel werden Kontrollen der Qualität von Kennzeichnungen am Produkt geprüft, wofür verschiedene Qualitätsstufen definiert sind, das sogenannte Grading.

Insbesondere bei einem schnell laufenden automatischen Produkthandling ist für das Sortieren eine schnelle und präzise arbeitende Sortiervorrichtung erforderlich. Um eine möglichst hohe Durchsatzleistung (hohe Menge je Zeiteinheit) zu erreichen, werden häufig mehrere parallel nebeneinander angeordnete Bearbeitungsspuren benutzt. Dies führt zu einem großen Platzbedarf und zu einer großen Breite der mehreren nebeneinander platzierten Sortiervorrichtungen.

Bei der Herstellung von Lebensmitteln ergibt sich zusätzlich noch die Notwendigkeit einer einfachen und schnellen Montage/Demontage, wenn insbesondere unverpackte Lebensmittel sortiert werden sollen und daher eine hygienische Reinigung aller Bestandteile der Gesamtanlage regelmäßig erfolgen muss. Weiterhin müssen sämtliche für den Kontakt mit dem unverpackten Lebensmittel vorgesehenen Komponenten des Transportsystems und der Sortiervorrichtung für diesen Kontakt mit dem Lebensmittel geeignet sein. Oft ist hierfür ein detaillierter Nachweis in Form eines Zertifikats oder einer Bescheinigung sowohl für das verwendete Grundmaterial, wie auch für dessen Weiterverarbeitung zu erbringen.

Für das eigentliche Sortieren sind diverse Grundprinzipien bekannt, wie z.B. das Ausblasen mittels Blasdüse(n), das seitliche Umleiten/Umlenken/Herausschieben (Umspuren) mittels ortsveränderlicher Leitbleche oder Schieber (englisch pusher), das höhenmäßige Umsetzen in andere Höhenebenen, sowie Kombinationen daraus und vieles andere mehr.

Zu den bekannten Sortiermechanismen zählt auch das Öffnen eines Sortierspaltes bzw. einer Lücke in der Förderstrecke, auf welcher die Produkte vor bzw. hinter der Sortierstation bewegt werden. Hierbei kann mindestens ein Teil der Fördereinheit waagerecht hin und her verschoben werden, um kurzzeitig eine Lücke für das Aussortieren der Produkte bereitzustellen. Der Sortierspalt kann aber auch durch ein Hoch- oder Herunterschwenken eines Teils der Fördereinheit geschaffen werden. In allen genannten Fällen muss die Sortiervorrichtung schnell genug und präzise genug arbeiten, um gezielt jedes beliebige einzelne Produkt aussortieren zu können, und gleichzeitig den unbeeinflussten Transport des vorhergehenden und des nachfolgenden Produkts nicht zu gefährden bzw. nicht zu stören. Anstelle diskreter Güter können die genannten Sortiermechanismen prinzipiell auch auf Schüttgüter angewendet werden.

Aufgabe der Erfindung ist es, eine modular aufgebaute Sortiervorrichtung anzubieten, die sowohl eine hohe Sortiergeschwindigkeit, eine einfache Montage/Demontage, eine einfache Reinigbarkeit und eine Kosteneinsparung durch nur wenige verwendete und vorzugsweise unverlierebare Bauteile bietet. Zusätzlich soll die vorgeschlagene technische Lösung einfach mehrspurig in der Breite (seitlich) erweiterbar sein und nur wenige produktberührende Bauteile aufweisen.

Gelöst wird die Aufgabe durch eine Sortiervorrichtung nach Anspruch 1 Diese Sortiervorrichtung umfasst eine aus dem Stand der Technik bekannte Vorrichtung, die eine erste, ortsfeste und vorzugsweise horizontale Drehachse und eine darum ausgebildete erste Welle aufweist. Von der ersten Drehachse beabstandet ist eine zur ersten Drehachse parallele zweite Drehachse vorgesehen mit einer um diese ausgebildeten zweiten Welle. Um beide Umlenkwellen ist ein Endlos-Transportmedium herumgelegt, bei dem es sich um einen oder mehrere seitlich nebeneinanderliegende Riemen oder Transportbänder handeln kann. Der obere Abschnitt des Transportmediums, der von der ersten zur zweiten Welle führt, soll als oben liegendes Trum (kurz: Obertrum) bezeichnet werden und dient zur Auflage und Förderung von Produkten. Der unterhalb des Obertrums liegende und von der zweiten Welle wieder zur ersten Welle zurückgeführte Abschnitt des Transportmediums soll als Untertrum bezeichnet sein. Die erste Welle kann angetrieben sein, um das Transportmedium um die beiden Wellen herum zu bewegen und dadurch auf dem Obertrum aufliegende Produkte zu fördern.

Die Produkte, die nicht aus dem Förderstrom aussortiert werden sollen, können entlang eines im Weiteren als "Förderweg" bezeichneten Weges durch bzw. über die Sortiervorrichtung geführt werden. Auszusortierende Produkte dagegen verlassen die Sortiervorrichtung durch einen Sortierspalt.

Die zweite Welle und das von ihr umlaufene Transportmedium ist zwischen zwei Schwenklagen um eine Schwenkachse so verschwenkbar, dass dadurch ein Sortierspalt im Förderweg geöffnet oder geschlossen wird. In einer ersten Schwenklage wird das Transportmedium mit der zweiten Welle aus dem Förderweg herausgeschwenkt und der Sortierspalt so geöffnet, dass gezielt Produkte aus dem Förderstrom durch den Sortierspalt hindurch aussortiert werden.

Bevorzugt befindet sich der Sortierspalt stromaufwärts des verschwenkbaren Transportmediums, sodass das auszusortierende Produkt (beispielsweise Schwerkraftbedingt) durch den Sortierspalt aus dem Förderstrom herausfällt, und das Transportmedium nicht erreicht. Denkbar ist jedoch auch eine Ausführungsform, bei der der Sortierspalt stromabwärts des Transportmediums gebildet wird. Dann wird das Produkt entlang des Transportmediums gefördert und erreicht - je nach dessen Schwenklage - den Sortierspalt oder die Fortsetzung des regulären Förderweges. (Theoretisch können bei diesem Förderprinzip auch mehrere verschiedene Schwenklagen eingenommen werden, um die Produkte jeweils auf unterschiedlichen Höhenpositionen an anschließende Fördermittel zu übergeben und dadurch zu sortieren).

Ist der Sortierspalt dagegen geschlossen, indem die zweite Welle und das von ihr umlaufene Transportmedium die zweite Schwenklage einnimmt und dadurch das Obertrum wieder in den Förderweg hinein bewegt, werden die Produkte nicht aussortiert und stattdessen entlang des regulär vorgesehenen Förderweges weitertransportiert.

Die Erfindung beruht auf der Erkenntnis, eine besonders leicht zu reinigende, modular zusammenstellbare und aus nur wenigen Bauteilen bestehende Sortiervorrichtung dadurch bilden zu können, dass die zweite Welle zur Einnahme der beiden Schwenklagen um eine ortsfeste Schwenkachse verschwenkbar ist, die nicht mit der Achse der ersten Welle zusammenfällt. Dadurch ergibt sich ein konstruktiv vereinfachter Aufbau gegenüber derjenigen Lösung, bei der die erste Umlenkwelle zugleich Antriebswelle und Schwenkachse ist, da dort die Verschwenkbarkeit und der Antrieb auf engem Raum um die gleiche Achse realisiert werden muss. Zugleich lässt sich der erfindungsgemäß vereinfacht aufgebaute Mechanismus leichter reinigen, da der Bereich der Schwenkachse leichter zugänglich ist. (Der Begriff "ortsfest" ist so zu verstehen, dass die betreffende Komponente ihre Position im Raum innerhalb fertigungsüblicher Toleranzen relativ zu einem Grundkörper nicht ändert. Der Grundkörper seinerseits kann im üblichen Betrieb beispielsweise mit einem räumlich fixierten Maschinengestell verbunden sein oder diesem entsprechen, und/oder mit dem Hallenboden verbunden sein).

In Kombination und Wechselwirkung mit dieser Schwenkachsenanordnung ist weiterhin vorgesehen, dass das Obertrum - anders als im Stand der Technik - in beiden Schwenklagen gerade bleibt, also jeweils nicht durch Kontakt mit anderen Komponenten der Vorrichtung geknickt oder umgelenkt wird. Insbesondere ist erfindungsgemäß vorgesehen, dass das Obertrum in keiner der beiden Schwenklagen von einem um die Schwenkachse ausgebildeten Schwenkachsenkörper in seiner geraden Ausrichtung behindert wird. Dadurch wird erfindungsgemäß sichergestellt, dass kein Abrieb erzeugt wird durch Reibkontakt zwischen Obertrum und nicht mitbewegten Komponenten der Vorrichtung, zu denen insbesondere die Schwenkachse bzw. ein die Schwenkachse ausbildender Schwenkachsenkörper gehört. Die Sortiervorrichtung erhält diese erfindungsgemäße Konfiguration durch die spezielle ortsfeste Anordnung der ersten Welle A, die bewegliche Anordnung der zweiten Welle B und die ortsfeste Anordnung der Schwenkachse S_{K}, wobei ein die Schwenkachse ausbildendender Schwenkachsenkörper so dimensioniert ist, dass in beiden Schwenklagen ein Abrieb-erzeugender Kontakt des Schwenkachsenkörpers mit einem um die beiden Wellen A, B geführten Transportmedium vermieden wird. Hygieneanforderungen, vorzugsweise aus dem Lebensmittelbereich, werden hierdurch erfüllt.

Bevorzugt wird außer dem Obertrum auch das Untertrum in beiden Schwenklagen nicht in seiner geraden Erstreckung von der ersten zur zweiten Welle durch den Schwenkachsenkörper behindert. In beiden Schwenklagen bildet das Transportmedium dann einen Querschnitt ("Bandquerschnitt"), der sich zusammensetzt aus den beiden um die erste und um die zweite Welle herumgeführten, kreisbogenförmigen Abschnitten des Transportmediums und den diese beiden Abschnitte verbindenden, durch das Obertrum und das Untertrum gebildeten geraden Abschnitten. Eine Umlenkung des Obertrum oder des Untertrum zwischen der ersten und zweiten Welle erfolgt erfindungsgemäß in keiner der beiden Schwenklagen und auch nicht während des Übergangs von einer in die andere Schwenklage.

Vorzugsweise sind genau zwei Wellen A, B zur Aufnahme des Transportmediums vorgesehen, so dass dieses von keinen anderen als den beiden Wellen A und B geführt oder umgelenkt wird. In jeder Schwenklage erstreckt sich dann das Obertrum (und vorzugsweise auch das Untertrum) gerade von der ersten zur zweiten Welle. Dadurch ergibt sich eine möglichst geringe Zahl an Bauteilen, und der konstruktive Aufwand ist entsprechend gering.

Eine erfindungsgemäße Sortiervorrichtung zum Sortieren bewegter Produkte umfasst somit eine erste, ortsfeste Welle A, die sich entlang einer ersten Achse S_{A} in einer vorzugsweise horizontalen Achsrichtung X erstreckt, sowie eine zweite Welle B, die zur ersten Welle A in einer senkrecht zur X-Achse verlaufenden Richtung Y beabstandet ist und sich entlang einer zur Achse S_{A} parallelen Achse S_{B} erstreckt.

Ein Endlos-Transportmedium R ist um die erste Welle A und die zweite Welle B gelegt und bildet ein Obertrum TW zur Auflage und zur Förderung von Produkten P aus, die auf dem Obertrum aufliegend durch Antrieb des Transportmediums entlang eines Förderweges bewegbar sind.

Die zweite Welle B ist aus einer unteren Schwenklage U um eine orstfeste, zur ersten und zweiten Achse S_{A}, S_{B} parallelen Schwenkachse S_{K} in eine obere Schwenklage O und zurück verschwenkbar, wobei durch Einnahme einer der beiden Schwenklagen ein Sortierspalt im Transportweg erzeugt wird zum Aussortieren ausgewählter Produkte aus dem regulären Förderweg. Durch Einnahme der anderen Schwenklage wird der Sortierspalt geschlossen, um die Produkte entlang eines Förderweges weiter zu bewegen. Der Abstand zwischen Schwenkachse S_{K} und der Achse S_{B} der zweiten Welle B entspricht dabei dem Schwenkradius.

Die Schwenkachse S_{K} ist von der ersten Achse S_{A} beabstandet und parallel zu dieser angeordnet. Weiterhin ist die Anordnung der ersten und der zweiten Welle sowie der Schwenkachse so gewählt, dass das Obertrum in beiden Schwenklagen jeweils gerade ist bzw. bleibt, indem für jede Schwenklage sichergestellt ist, dass die Schwenkachse oder ein die Schwenkachse ausbildender Schwenkachsenkörper die gerade Erstreckung des Obertrum nicht behindert oder gar umgelenkt, um Abrieb im Förderbetrieb oder die temporäre Dehnung des Transportmediums beim Verschwenken zu vermeiden. Vorzugsweise gilt dies auch für das Untertrum.

Die erfindungsgemäßen Vorteile zur Vermeidung von Abrieb lassen sich erreichen, wenn die Schwenkachse oder ein Schwenkachsenkörper die gerade Erstreckung des Obertrums in keiner Schwenklage beeinflussen. Die Schwenkachse kann dazu außerhalb oder innerhalb des Bandquerschnitts angeordnet sein. Bei Anordnung außerhalb des Bandquerschnitts ist die Lagerung eines Schwenkachsenkörpers eventuell einfacher zu realisieren. Andererseits könnte der Schwenkachsenkörper den Weg der Produkte versperren, den diese beim Fördern bzw. Aussortieren nehmen.

Eine besonders vorteilhafte Ausführungsform der Erfindung sieht daher vor, dass die Schwenkachse vom Transportmedium umlaufen wird, die Schwenkachse also innerhalb des Bandquerschnitts bzw. zwischen Obertrum und Untertrum angeordnet ist. Zum einen kann die Schwenkachse in dieser Anordnung den Transport der Produkte nicht behindern. Zum anderen wird der mögliche Abstand der Schwenkachse zur ersten Achse der ersten Welle A dadurch eingegrenzt. Je näher diese beiden ortsfesten Achsen beieinanderliegen, umso weniger ändert sich der Abstand der ersten von der zweiten Welle während des Verschwenkens, so dass eine im Transportmedium herrschende Vorspannung beim Verschwenken weitgehend beibehalten werden kann. In der weiteren Beschreibung wird daher davon ausgegangen, dass sich die Schwenkachse zwischen dem Obertrum und dem Untertrum des Transportmediums befindet.

Diese Anordnung beansprucht vorteilhaft wenig Bauraum, der insbesondere unterhalb und oberhalb des Transportmediums frei bleiben kann. Andererseits wird durch die Positionierung der Schwenkachse innerhalb des Transportmediums der mögliche Schwenkwinkel beeinflusst, wenn ein Abrieb erzeugender Kontakt zwischen Schwenkachse (genauer: zwischen einem Schwenkachsenkörper, der die Schwenkachse physikalisch ausbildet) und dem Transportmedium vermieden werden soll. Um zugleich den durch das Verschwenken entstehenden Sortierspalt ausreichend groß gestalten zu können sieht eine vorteilhafte Ausführungsform der Erfindung vor, die Schwenkachse möglichst nahe an der ersten ortsfesten Achse S_{A} zu positionieren, sodass der Abstand zwischen Schwenkachse und zweiter Achse S_{B} möglichst groß ausfällt. Durch den größeren Abstand zwischen Schwenkachse und um die Schwenkachse verschwenkbarer zweiter Welle B genügt bereits ein geringerer Schwenkwinkel zur Ausbildung eines ausreichend großen Sortierspalts.

Der möglichst geringe Abstand zwischen erster Achse S_{A} und Schwenkachse bringt noch einen weiteren Vorteil mit sich, wenn die Schwenkachse innerhalb des Transportmediums angeordnet ist. Da die Schwenkachse erfindungsgemäß nicht mit der ortsfesten ersten Achse S_{A} identisch ist, bewegt sich das Transportmedium beim Verschwenken relativ zur Schwenkachse, so dass sich die Schwenkachse dem Obertrum oder Untertrum annähert. Um störenden Abrieb im Betrieb zu vermeiden, sollte die Schwenkachse (genauer: ein die Schwenkachse physikalisch ausbildender Schwenkachsenkörper) das Transportmedium jedoch nicht oder nur möglichst reibungsfrei und dann ohne Auslenkung des Transportmediums berühren. Der dies berücksichtigende zulässige Schwenkwinkel wird umso größer, je näher die Schwenkachse bzw. der Schwenkachsenkörper an der ortsfesten ersten Achse S_{A} angeordnet ist. Vorzugsweise weist die Schwenkachse S_{K} daher zur erstens Achse S_{A} einen Abstand y_{A} und zur zweiten Achse S_{B} einen Abstand y_{B} auf, wobei gilt y_{A} < y_{B}, vorzugsweise y_{A} < 0.2 · y_{B}.

Unter der Annahme, dass der reguläre Förderweg im Wesentlichen horizontal verläuft (eine geringe Steigung, welche die sichere Auflage der Produkte auf dem Obertrum nicht gefährdet, ist hier unschädlich), kann die zweite Welle mit dem Transportmedium entweder nach oben oder nach unten aus dem Förderweg heraus geschwenkt werden, um den zuvor beschriebenen Sortierspalt auszubilden. Soll die Verschwenkung nach oben erfolgen ist es zweckmäßig, die Schwenkachse S_{K} relativ zur ersten Achse S_{A} so zu positionieren, dass sie in der unteren Schwenklage relativ nahe an der Unterseite des Obertrums liegt und zugleich einen möglichst großen Abstand zur Innenseite des Untertrums aufweist. Beim Verschwenken in die obere Schwenklage wird dann der Abstand zwischen Schwenkachsenkörper und Obertrum größer, während der Abstand zwischen Schwenkachsenkörper und Untertrum kleiner wird. Je kleiner bzw. größer die vorgenannten Abstände zwischen Schwenkachsenkörper und Obertrum bzw. Untertrum gewählt werden, umso größer ist der insgesamt zulässige Schwenkwinkel. Soll die Verschwenkung aus der Horizontalen dagegen nach unten erfolgen gilt die vorgenannte Überlegung sinngemäß umgekehrt, um einen möglichst großen Schwenkwinkel nach unten zu ermöglichen.

Weiterhin vorzugsweise ist ein die Schwenkachse ausbildender Schwenkachsenkörper mit möglichst geringem Außendurchmesser ausgebildet, um auch dadurch einen ausreichenden Abstand zum Obertrum oder Untertrum in allen Schwenklagen einzuhalten.

Um die zweite Welle B um die Schwenkachse zu verschwenken ist ein manuell oder automatisch antreibbarer Schwenkmechanismus vorgesehen, der entweder unmittelbar an der zweiten Welle B oder an einer die zweite Welle B aufnehmenden Halterung H angreift. Der Schwenkmechanismus kann ein ansteuerbares Stellglied, insbesondere einen pneumatischen Stellantrieb, umfassen, welcher die zweite Welle B aus der unteren in die obere Schwenklage und zurück überführt. Ein Abschnitt des Schwenkmechanismus kann dabei im Wesentlichen ortsfest an einem Anlagengestell angeordnet sein, während ein zweiter Abschnitt an der Halterung H oder der zweiten Welle B angreift. Vorzugsweise ist der Schwenkmechanismus leicht von der zweiten Welle oder ihrer Halterung zu lösen, insbesondere werkzeuglos, um die Entnahme der zweiten Welle und/oder ihrer Halterung H mitsamt dem Transportmedium aus der Anlage zu erleichtern.

Zweckmäßigerweise greift der Schwenkmechanismus so an der Halterung H oder der zweiten Welle B an, dass der Transportweg auf dem Obertrum des Transportmediums davon nicht behindert wird. Denkbar ist beispielsweise ein U-förmiger Bügel, dessen Scheitel sich in X-Richtung ausreichend weit oberhalb (oder auch unterhalb) des Transportmediums erstreckt, während die beiden Schenkel sich ausgehend vom Scheitel zu beiden Seiten des Transportmediums (in X-Richtung gesehen also davor und dahinter) zur Halterung H bzw. zweiten Welle B hinab oder hinauf erstrecken und dort angreifen. Eine Kolbenstange eines pneumatischen Stellantriebs kann beispielsweise am Scheitel des Bügels angreifen.

Die vorstehenden Betrachtungen sind bisher davon ausgegangen, dass ein die Schwenkachse physikalisch ausbildender Schwenkachsenkörper vorgesehen ist, der sich in X-Richtung und parallel zu den beiden Achsen S_{A}, S_{B} zwischen Obertrum und Untertrum, hindurch erstreckt. Allerdings werden die erfindungsgemäßen Vorteile bereits erreicht durch die erfindungsgemäße Positionierung der Schwenkachse, also des Drehpunktes, solange die Verschwenkbarkeit der zweiten Welle um die Schwenkachse sichergestellt ist. Das kann beispielsweise verwirklicht werden durch zwei Lagerstellen, die in X-Richtung gesehen vor und hinter dem Transportmedium liegen und die Lage der Schwenkachse definieren, jedoch ohne dass ein Schwenkachsenkörper beide Lagerstellen in X-Richtung miteinander verbindet. Maßgeblich ist allein, dass eine geeignete, den Schwenkradius definierende Halterung an den auf der Schwenkachse liegenden Lagerstellen angreift und in einem den Schwenkradius definierenden Abstand die zweite Welle trägt bzw. um die Schwenkachse führt. Diese Ausführungsform hat den Vorteil, dass der Bereich zwischen Obertrum und Untertrum von einem Schwenkachsenkörper frei bleiben kann, so dass die Gefahr einer Abrieb erzeugenden Berührung zwischen Schwenkachsenkörper und Transportmedium noch besser vermieden wird. Die die zweite Welle führende Halterung H kann über die Schwenkachse bzw. die zweite Achse S_{B} auch hinausragen, etwa um einen zwischen der ersten Welle und dem Schwenkachsenkörper bestehenden Spalt seitlich abzudecken.

Ein die beiden Lagerstellen verbindender Schwenkachsenkörper dagegen erhöht die Stabilität der gesamten Vorrichtung und vereinfacht unter Umständen die Schwenklagerung. In diesem Fall sieht eine vorteilhafte Weiterbildung der Erfindung vor, dass der die Schwenkachse S_{K} ausbildende Schwenkachsenkörper in beiden Schwenklagen einen über die gesamte Breite des Obertrums in X-Richtung verlaufenden Spalt zwischen dem Schwenkachsenkörper und dem Obertrum einhält, um ungewollte Berührungen und Abrieb zu vermeiden.

Die zweite Welle B wird beim Verschwenken auf einer Kreisbahn um die Schwenkachse geführt. In einer Weiterbildung der Erfindung wird diese Führung gebildet durch eine in ihrer Längsrichtung elastische oder steife Halterung H, die sich von der Schwenkachse S_{K} (bzw. von dort ausgebildeten Lagerstellen) zur zweiten Welle B erstreckt. Mit "Längsrichtung" ist hier die Richtung bzw. der Radius von der Schwenkachse zur zweiten Achse S_{B} der zweiten Welle B gemeint. Die Halterung kann als steife Strebenkonstruktion ausgebildet sein und als wesentliche Elemente zwei Streben aufweisen, die (in X-Richtung gesehen) im Wesentlichen vor und hinter dem Transportmedium angeordnet sind und sich in Y-Richtung jeweils von einer Lagerstelle zur zweiten Welle hin erstrecken und so die zweite Welle an der Schwenkachse abstützen bzw. um sie führen.

Die Halterung H kann sich jedoch mit dafür vorgesehenen Abschnitten in X-Richtung auch in den Bereich zwischen Obertrum und Untertrum hinein oder vollständig hindurch erstrecken, um die Halterung insgesamt stabiler auszubilden und beispielsweise die beiden vorgenannten Streben miteinander zu verbinden. Dabei kann die Halterung auch mit einer der Innenseite des Obertrums zugewandten reibungsarmen Kontaktfläche ausgestattet sein. Diese Kontaktfläche kann dazu dienen, das Obertrum auf seiner einem darauf aufliegenden Produkt abgewandten Innenseite reibungsfrei oder reibungsarm abzustützen, um die Produkte sicherer und lagestabil auf dem Obertrum fördern zu können.

Die Halterung kann auch elastisch bzw. federnd ausgebildet sein, um in radialer Richtung eine Vorspannkraft zwischen Schwenkachse und zweiter Achse S_{B} der zweiten Welle B erzeugen zu können. Diese Vorspannkraft drückt die zweite Welle B von der Welle A fort, so dass das die erste und zweite Welle A, B umlaufende Transportmedium mit einer der Vorspannkraft entsprechenden Gegenkraft vorgespannt wird. Die Vorspannkraft kann einstellbar sein, etwa über einen in seiner Wirklänge verstellbaren Federmechanismus.

Eine im Transportmedium wirkende Spannkraft kann selbst verständlich alternativ oder ergänzend auch durch entsprechende Dimensionierung des Transportmediums selber erzeugt werden, etwa indem der Abstand zwischen erster und zweiter Welle so gewählt wird, dass das Transportmedium nur gedehnt auf die Wellen aufgezogen werden kann.

Um die Schwenkachse ortsfest zu halten, sind in einer Ausführungsform der Erfindung ortsfeste Achsenaufnahmen F vorgesehen. Die Achsenaufnahmen dienen dazu, einen Schwenkachsenkörper oder Elemente zur Ausbildung einer Lagerstelle der Schwenkachse ortsfest aufzunehmen, wobei die Halterung H der zweiten Welle B relativ zu den ortsfesten Achsenaufnahmen gelagert und um die Schwenkachse schwenkbar ist.

Um die Halterung H in den Achsenaufnahmen F schwenkbar zu lagern sieht eine Ausführungsform der Erfindung vor, dass ein Schwenkachsenkörper in eine Achsenaufnahme F einsetzbar ist, wobei der Schwenkachsenkörper selbst gegenüber der Achsenaufnahme F beispielsweise nicht drehbar gelagert ist und somit eine im Wesentlichen ortsfeste und drehfeste Komponente ausbildet. Die Halterung der zweiten Welle B wird dann über geeignete Lagermittel (Wälzlager, Gleitlager, Gleitbuchsen etc.) schwenkbar auf dem drehfesten Schwenkachsenkörper gelagert. Beispielsweise könnte auf den ortsfesten Schwenkachsenkörper eine Lagerbuchse aufgeschoben werden, die mit dem Schwenkachsenkörper eine reibungsarme Materialpaarung bildet. Mit der Lagerbuchse kann dann ein Abschnitt der Halterung H drehfest verbunden sein. Die Lagerbuchse kann sich über die gesamte Länge des Schwenkachsenkörpers erstrecken, der sich seinerseits beispielsweise über die gesamte Breite des Transportmediums erstrecken kann. Dann können auch mehrere, in X-Richtung hintereinander liegende Abschnitte der Halterung H oder ein durchgehender Halterungsabschnitt entlang des Schwenkachsenkörpers an der Lagerbuchse angreifen, um eine besonders stabile Führung der Halterung um die Schwenkachse zu erreichen. Es sind auch mehrere einzelne Lagerbuchsen als Lagerelemente denkbar, an denen geeignete Abschnitte der Halterung H angreifen.

Anstelle eines durchgehenden Schwenkachsenkörpers, der sich nach Art eines Achsenstabs über die ganze Breite des Transportmediums erstrecken kann, kann der Schwenkachsenkörpers auch durch einzelne (vorzugsweise zwei) kurze Abschnitte im Bereich der Achsenaufnahmen bzw. zu beiden Seiten des Transportmediums ausgebildet sein, die dann zugleich Teile von Lagerelementen bilden. Auch hier wäre ein (dann den Schwenkachsenkörper ausbildenden) erster Abschnitt der Lagerelemente mit der Achsenaufnahme verbunden und insoweit drehfest, während ein zweiter Abschnitt der Lagerelemente relativ zum ersten Abschnitt reibungsfrei und drehbar an diesem angeordnet und mit einem Abschnitt der Halterung H verbunden sein kann.

Alternativ ist der Schwenkachsenkörper selbst drehbar in den Achsenaufnahmen gelagert und mit der Halterung fest verbunden, um die Schwenkbewegungen mit zu vollführen. Beispielsweise könnte jeweils ein Achsenstab oder Lagerzapfen als ortsfestes Lagerelement in eine Achsenaufnahme eingesetzt werden, während ein hülsenförmig ausgebildeter Schwenkachsenkörper als Lagerbuchse reibungsarm auf den Lagerzapfen aufgeschoben wird und seinerseits mit der Halterung der zweiten Welle fest verbunden oder verbindbar ist. Der Schwenkachsenkörper kann sich wieder über die gesamte Breite des zugehörigen Transportmediums erstrecken, sodass auch mehrere, in X-Richtung hintereinander liegende Elemente der Halterung H an verschiedenen X-Positionen an dem Schwenkachsenkörper befestigt werden können.

Der Schwenkachsenkörper (bzw. die mit ihm zusammen wirkenden Lagerelemente, die im Folgenden vom Begriff des Schwenkachsenkörpers mit umfasst sein sollen) sind - vorzugsweise werkzeuglos - aus den Achsenaufnahmen entnehmbar. Dadurch wird die besonders leichte Demontage bzw. der modulartige Austausch einzelner Komponenten der Sortiervorrichtung vereinfacht. (Die Möglichkeit der werkzeuglosen Entnahme reduziert auch die Anzahl verlierbarer Teile, da beispielsweise lose Schrauben entfallen können. Die erfindungsgemäße Sortiervorrichtung weist daher bevorzugt keine verlierbaren Einzelteile auf, um insbesondere Anforderungen aus der Lebensmittelindustrie zu entsprechen.)

Nach einer vorteilhaften Ausführungsform der Erfindung weisen die Achsenaufnahmen F Vertiefungen V auf, in welche ein Abschnitt des Schwenkachsenkörpers zu dessen ortsfester Positionierung einführbar ist. Zweckmäßigerweise sind diese Vertiefungen zu einer von der ersten Achse S_{A} abgewandten Seite hin offen, sodass der Schwenkachsenkörper in Richtung auf die erste Achse in die Achsenaufnahme einsetzbar ist. Durch die offene Ausführung der Vertiefungen lässt sich der Schwenkachsenkörper leicht aus der Achsenaufnahme entnehmen. In einer einfachen Ausführungsform haben die Vertiefungen etwa U-förmige Gestalt, in die der Schwenkachsenkörper mit geeigneten Abschnitten (Achszapfen) bis auf den Grund der Vertiefung eingesetzt bzw. eingeschoben werden kann.

Erfindungsgemäß kann die Vertiefung auf ihrer der ersten Welle A abgewandten und zugleich der zweiten Welle B zugewandten Seite offen bleiben, ohne dass der Schwenkachsenkörper aus der Achsenaufnahme herausfallen könnte. Da die zweite Welle B und die mit ihr gekoppelte Halterung H über die im Transportmedium vorherrschende Vorspannkraft in Richtung auf die erste Welle A vorgespannt wird, kann der mit der Halterung gekoppelte Schwenkachsenkörper unter Überwindung der Vorspannkraft und durch entsprechende Bewegung in Richtung auf die zweite Welle B aus der Achsenaufnahme entfernt werden. Im regulären Betrieb ist die Vorspannkraft jedoch stets ausreichend hoch gewählt, um den Schwenkachsenkörper in Richtung auf den Grund der Vertiefung bzw. in Richtung auf die erste Welle A und damit in die ortsfeste Achsenaufnahme F hineinzudrücken. Die in den Achsenaufnahmen vorgesehenen Vertiefungen können auch als labyrinthartige Kulissenführung ausgebildet sein, um den Schwenkachsenkörper zusätzlich gegen unbeabsichtigtes Lösen zu sichern. Die Kulisse kann dazu rechtwinklig oder schräg ineinander übergehende Führungsnuten aufweisen, um den Schwenkachsenkörper sicher und dennoch werkzeuglos in der Achsenaufnahme arretieren zu können.

Die Ausbildung der Achsenaufnahme mit Vertiefungen ermöglicht die erfindungsgemäße modulare Ausbildung der Sortiervorrichtung bzw. ihre schnelle und vorzugsweise werkzeuglose Demontage. Unter Überwindung der Vorspannkraft kann der Schwenkachsenkörper aus den Vertiefungen der Achsenaufnahmen herausgehoben werden. Daran anschließend kann die Vorspannkraft im Transportmedium vollständig abgebaut werden, indem der Schwenkachsenkörper außerhalb der Achsenaufnahme(n) wieder auf die erste Welle A zubewegt wird, da dann die Halterung H und mit ihr die zweite Welle B dieser Bewegung folgen kann, und sich der Abstand zwischen erster und zweiter Welle verringert.

Die Anordnung aus Schwenkachsenkörper, Halterung H und zweiter Welle B kann dann aus der Vorrichtung in X-Richtung herausgenommen werden. Das nicht mehr vorgespannte Transportmedium kann von der ersten Welle A dann frei herabhängen und, wie nachfolgend noch beschrieben wird, ebenfalls leicht ausgetauscht werden.

Vorzugsweise umfasst die Achsenaufnahme flache Wangen, die sich senkrecht zur X-Achse erstrecken und beispielsweise aus Blech, steifem Kunststoff oder einem Material mit ähnlichen Eigenschaften gefertigt sind. So lassen sich die Vertiefungen bzw. Kulissenführungen leicht einbringen (bspw. stanzen, fräsen). Zugleich beanspruchen die Bleche, vorzugsweise mit einer Dicke von wenigen Millimetern, in X-Richtung sehr wenig Platz und können leicht von oben oder unten auch zwischen mehreren Sortiervorrichtungen einer Sortieranlage positioniert werden, die in X-Richtung hintereinander liegen. Die Bleche der Achsenaufnahmen sind vorzugsweise entlang eines ortsfesten, sich in X-Richtung erstreckenden Holmes L verschieblich aber drehfest, und an einer Sollposition arretierbar. Damit lassen sich die X-Abstände der Bleche durch Verschieben entlang des Holmes variieren und auf unterschiedlich breite Transportmedien einstellen. Ferner lassen sich zusätzliche Wangen auf den Holm aufschieben, wenn weitere erfindungsgemäße Sortiervorrichtungen in X-Richtung hintereinander angeordnet werden sollen. Alternativ können die einzelnen Achsenaufnahmen auch am Holm festgeschweißt sein.

Nach einer bevorzugten Ausführungsform weist der Holm quer zur X-Richtung ein Querschnittsprofil auf, welches komplementär zu dem Profil einer Ausnehmung in den Achsenaufnahmen gestaltet ist, so dass einzelne Achsenaufnahmen unter Eingriff der beiden Profile drehfest aber verschiedentlich auf dem Holm angeordnet werden können. Nach einer vorteilhaften Variante der Erfindung ist der Holm nur einseitig ortsfest eingespannt und ragt in X-Richtung frei hervor. An seinem freien Ende wird er nicht abgestützt und gestattet über dieses freie Ende den einfachen Austausch von Achsenaufnahmen.

Erfindungsgemäß ist die Schwenkachse zur ersten Achse S_{A} der ersten Welle A beabstandet, da die Trennung beider Achsen den Aufbau der Sortiervorrichtung konstruktiv vereinfacht. Auch der Lagerverschleiß ist geringer. Weiterhin ist vorgesehen, dass zwischen dem Schwenkachsenkörper K_{K} und der ersten Welle A ein Spalt verbleibt, um den Kontakt dieser beiden Komponenten und eventuell daraus resultierenden Abrieb zu vermeiden.

Die vorgenannte Sortiervorrichtung umfasst eine erste ortsfeste Welle A, die auch als Antriebswelle dienen kann. Die zweite Welle B ist verschwenkbar, um im Förderweg nach Bedarf einen Sortierspalt zum Ausschleusen von Produkten zu erzeugen. Häufig werden Produkte jedoch auch mehrspurig gefördert, also entlang von eng nebeneinander liegenden Bahnen oder Förderwegen. Der Produktdurchsatz kann dadurch erhöht werden, auch weil bei paralleler Förderung der Produkte der Ausschleusevorgang auf einer Bahn die Förderung auf anderen Bahnen nicht behindert. Um Produkte mehrspurig fördern und insbesondere auch ausschleusen zu können, bietet es sich an, mehrere der erfindungsgemäßen Sortiervorrichtungen in X-Richtung hintereinander anzuordnen, und dadurch eine mehrspurige Sortieranlage auszubilden. Jeder Sortiervorrichtung bildet dann ein Modul, welches wenigstens folgende, nur dem jeweiligen Modul dienende Komponenten umfasst: Ein Transportmedium R (Förderband, ein oder mehrere Riemen oder Ketten etc.), einen um eine Schwenkachse ausgebildeten Schwenkachsenkörper, eine um die Schwenkachse verschwenkbare und von dem Transportmedium umlaufene Welle B sowie eine die Welle B um die Schwenkachse führende und an dieser angreifende Halterung H. Die für jede Sortiervorrichtung ebenfalls erforderliche erste Welle A kann dagegen als eine allen Sortiervorrichtungen gemeinsam dienende, vorzugsweise angetriebene ortsfeste Welle A' ausgebildet sein, um welche das Transportmedium jeder einzelnen Sortiervorrichtung herumgeführt ist. Entsprechend ist die allen Modulen gemeinsam dienende erste Welle A' länger als die Welle B jedes einzelnen Moduls. Zweckmäßigerweise addieren sich die Längen der zweiten Wellen B der einzelnen Module zur Gesamtlänge der ersten Welle A'. Natürlich kann die erste Welle A' auch länger gewählt werden, um die zukünftige Montage weiterer Sortiervorrichtungen und damit die Erhöhung der Spuranzahl zu ermöglichen.

Die Ausbildung einer für alle Sortiervorrichtungen gemeinsamen ersten Welle vereinfacht die Konstruktion der gesamten Vorrichtung. Alle Transportmedien der einzelnen Sortiervorrichtungen werden von der gemeinsamen ersten Welle A' aufgenommen und - wenn diese Welle zugleich Antriebswelle ist - angetrieben, sodass nur ein einziger Antrieb für alle Sortiervorrichtungen erforderlich ist. Die einzelnen Sortiervorrichtungen liegen dabei in X-Richtung vorzugsweise fluchtend hintereinander, wobei die einzelnen Spuren der Sortieranlage dann parallel zueinander und quer zur X-Richtung verlaufen. Das Transportmedium einer Spur kann dann durch Verschwenken der dieser Spur zugehörigen zweiten Welle B verschwenkt werden, um ein Produkt auszuschleusen. Gleichzeitig können auf den anderen Spuren unabhängig davon Produkte gefördert oder ausgeschleust werden durch Verschwenken des jeweiligen Transportmediums bzw. der jeweils zugehörigen zweiten Welle in die jeweils gewünschte Schwenklage.

Vorzugsweise sind die Schwenkachsen der einzelnen Sortiervorrichtungen in der vorstehend beschriebenen Weise jeweils lösbar in Achsenaufnahmen F einsetzbar, die ihrerseits bevorzugt mit den vorgenannten Vertiefungen oder Kulissenführungen für die Aufnahme der einzelnen Schwenkachsen ausgebildet sind. Für jedes Modul können zwei als Achsenaufnahme dienende flache Wangen vorgesehen sein, die vorzugsweise entlang des zuvor beschriebenen ortsfesten Holmes in X-Richtung verschoben bzw. positioniert und arretiert werden, um den zum Modul zugehörigen Schwenkachsenkörper zwischen sich aufnehmen zu können. Bei geeigneter Ausbildung der Lagerung des Schwenkachsenkörpers kann eine Wange auch zur Aufnahme zweier in X-Richtung unmittelbar hintereinander liegender Schwenkachsenkörper zweier benachbarter Module dienen. Dazu könnte die Wange zwei in X-Richtung hintereinander liegende Wangenabschnitte aufweisen, von denen je ein Abschnitt zur Aufnahme eines Endbereiches des einen bzw. des dazu benachbarten anderen Schwenkachsenkörpers dient.

Nach einer vorteilhaften Ausführungsform der Erfindung, welche die Entnahme einzelner Module zusätzlich erleichtert, kragt die erste Welle A bzw. A' von einem ortsfesten Grundkörper M freitragend hervor, sodass ein dem Grundkörper M abgewandtes Ende der ersten Welle nicht abgestützt bzw. gelagert ist. Die vorzugsweise als Antriebswelle dienende erste Welle erstreckt sich dabei in X-Richtung über die gesamte Breite der Sortieranlage, um alle Transportmedien der einzelnen Module in X-Richtung hintereinanderliegend aufnehmen und antreiben zu können. Da das freie Ende dieser Welle zweckmäßigerweise nicht gelagert oder abgestützt oder mit anderen Komponenten verbunden wird, können die einzelnen Transportmedien in Richtung des freien Endes von der Welle abgenommen werden (schnell und vorzugsweise manuell entnehmbare Abdeckungen, die den Betrieb der Welle mechanisch nicht beeinflussen und beispielsweise der Betriebssicherheit dienen, können das freie Wellenende erforderlichenfalls jedoch abdecken und für den Austausch der Module bzw. Transportmedien einfach entfernt werden).

Durch die erfindungsgemäße Trennung der Schwenkachse bzw. Schwenkachsen von der ersten (gemeinsamen) Welle A' und die vorgenannte Gestaltung der einzelnen Sortiervorrichtungen ist es möglich, die einzelnen Module auf einfache Weise individuell aus der Sortieranlage herauszunehmen, etwa zur Wartung, zur Reinigung oder zum Austausch. In X-Richtung daran mittelbar oder unmittelbar angrenzende weitere Module müssen dazu nicht vollständig aus der Sortieranlage entfernt werden, wodurch sich die Stillstandszeit einzelner Sortiervorrichtungen bzw. der gesamten Sortieranlage deutlich reduziert. Der Austausch eines zwischen anderen Modulen in einer erfindungsgemäßen Sortieranlage eingebauten Moduls könnte folgendermaßen vor sich gehen:
1. Lösen des Schwenkantriebes des ausgewählten Moduls von der Halterung H oder der zweiten Welle B.
2. Lösen des Schwenkachsenkörpers K_{K} mit der Halterung H aus den Achsenaufnahmen F unter Überwindung der im Transportmedium vorherrschenden Spannkraft (danach ist die zweite Welle B nur noch über das nicht mehr vorgespannte Transportmedium mit der ersten Welle A verbunden und kann daran nach unten hängen, gemeinsam mit der Halterung H und dem Schwenkachsenkörper K_{K}.)
3. Lösen weiterer Schwenkachsenkörper und Schwenkantriebe benachbarter Module zwischen dem ausgewählten Modul und dem freien Ende der ersten Welle A', so dass das zu entnehmende Transportmedium des ausgewählten Moduls über die noch auf der ersten Welle angeordneten Transportmedien der anderen Module hinweg in X-Richtung von der Welle abgenommen werden können, gemeinsam mit der dem Modul zugehörigen zweiten Welle, ihrer Halterung H und ihres Schwenkachsenkörpers.
4. Die so entfernten Komponenten des Moduls können in umgekehrter Reihenfolge wieder in die Sortieranlage eingesetzt werden.
5. Nach Einhängen der Schwenkachse des ausgewählten Moduls in die zugehörigen Achsenaufnahmen wird das zugehörige Transportmedium wieder vorgespannt. Der zugehörige Schwenkantrieb ist zu montieren.
6. Die gegebenenfalls gelösten Schwenkachsen und Schwenkantriebe weiterer Module sind wieder zu befestigen, wonach die Sortieranlage wieder betriebsbereit ist.

Die ortsfeste erste Achse S_{A} und die ebenfalls ortsfeste und zur ersten Achse parallele Schwenkachse S_{K} definieren gemeinsam eine gedachte Ebene E. Nach einer vorteilhaften Ausführungsform der Erfindung ist vorgesehen, dass sich die Achse der zweiten Welle während des Übergangs von einer in die andere Schwenklage durch diese Ebene E hindurchbewegt. Durch diese Vorgabe ist es möglich, die Schwenkbewegung der zweiten Welle zum Teil selbsttätig, also ohne externe Beaufschlagung der Welle oder ihrer Halterung zu bewirken. Liegt die zweite Schwenkachse in der Ebene E und die Schwenkachse S_{K} zwischen der ersten und zweiten Achse S_{A}, S_{B}, dann ist die zweite Achse S_{B} entlang ihres möglichen Schwenkweges um die Schwenkachse maximal von der ersten S_{A} Achse entfernt. Entsprechend ist die durch das Transportmedium auf die beiden Wellen einwirkende Spannkraft in dieser Anordnung maximal, sodass die zweite Welle aus dieser Lage zum Abbau der Vorspannkraft auf eine der beiden Seiten der Ebene E bzw. in Richtung auf eine der beiden Schwenklagen gedrängt wird. Der die zweite Welle verschwenkende Schwenkantrieb kann dann vorteilhafter Weise so ausgebildet sein, dass er die Welle lediglich von einer auf die andere Seite der Ebene E bewegen muss. Den restlichen Schwenkweg zur Einnahme der jeweiligen angestrebten Schwenklage überstreicht die zweite Welle dann von alleine, angetrieben von der Spannkraft im Transportmedium. Extern einzubringende Betätigungsenergie ist für diesen Teil der Verschwenkung dann vorteilhafter Weise nicht erforderlich.

Nach einer alternativen Ausführungsform bleibt die zweite Welle in beiden Schwenklagen auf der gleichen Seite der genannten Ebene, wobei die Spannkraft im Transportmedium die zweite Welle stets in Richtung einer der beiden Schwenklagen zieht. Zur Einnahme der anderen Schwenklage muss der Schwenkmechanismus die Welle oder ihre Halterung daher lediglich in diese Richtung bzw. einseitig beaufschlagen. Die Bewegung zurück in die andere Schräglage kann dann alleine durch Abbau der Spannkraft im Transportmedium erfolgen, etwa indem der Schwenkmechanismus kraftfrei geschaltet wird (durch Entkopplung von einem Antrieb, Entspannung eines Pneumatikzylinders auf Umgebungsdruck etc.). Eventuell vorzusehende Notlaufeigenschaften können diesen Effekt nutzen, etwa indem bei Ausfall des Schwenkantriebes stets selbsttätig eine als sicher definierte Schwenklage eingenommen wird.

Nachfolgend soll eine Ausführungsform der Erfindung anhand eines Figurenbeispiels näher erläutert werden. Dabei zeigt
- Figur 1: eine perspektivische Ansicht einer erfindungsgemäßen Sortiervorrichtung;
- Figur 2: eine schematische Seitenansicht der Vorrichtung gemäß Figur 1 in der unteren Schwenklage;
- Figur 3: die Vorrichtung gemäß Figur 1 in der oberen Schwenklage;
- Figur 4: eine Draufsicht auf die Vorrichtung gemäß Figur 1, und
- Figur 5: eine Detailansicht einer Achsenaufnahme F.

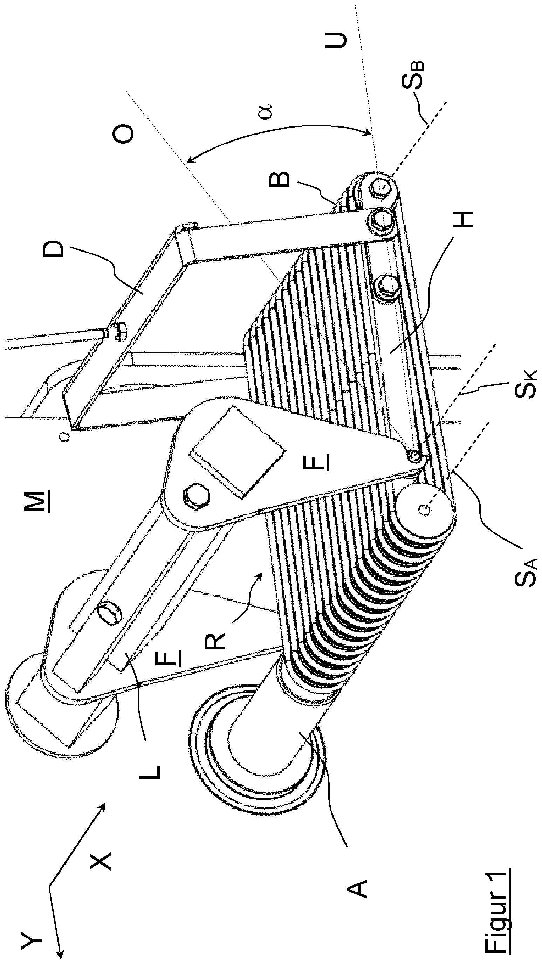

Die Sortiervorrichtung nach Figur 1 umfasst eine erste Welle A, die sich in einer ersten Richtung X um eine erste Achse S_{A} erstreckt. Die erste Welle A ist ortsfest an einem nicht näher dargestellten Grundkörper M angeordnet und zur Rotation um ihre Achse S_{A} antreibbar. Die erste Welle A kragt freitragend von dem Grundkörper M hervor und ist an ihrem freien Ende daher nicht gelagert.

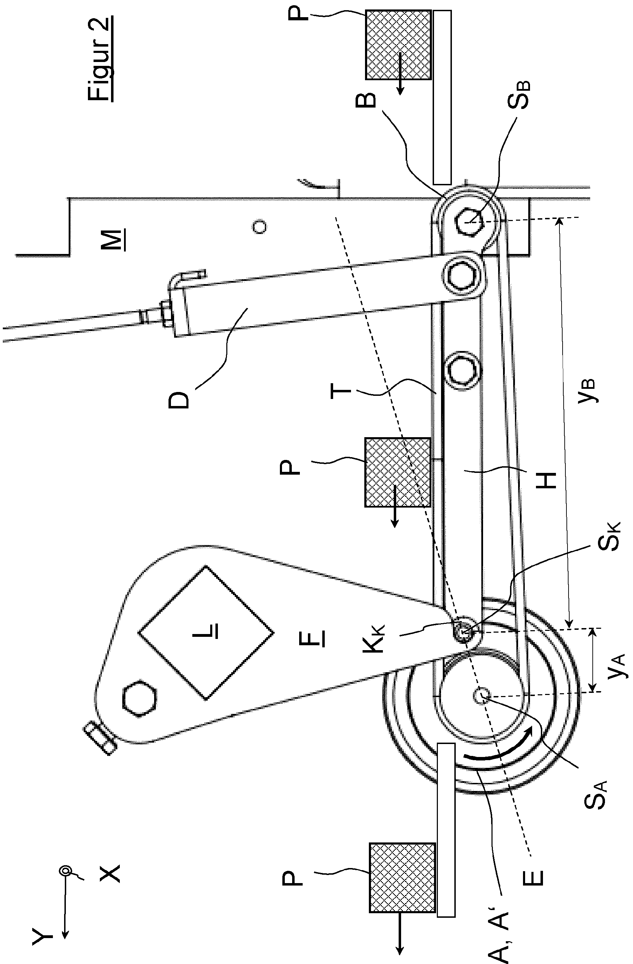

Parallel zur ersten Welle A erstreckt sich eine zweite Welle B um ihre Achse S_{B}. Um die erste und zweite Welle A, B ist ein aus mehreren parallel zueinander verlaufenden einzelnen Riemen gebildetes Transportmedium R mit einer Vorspannung herum gelegt. Die Oberseite des Transportmediums R dient als Auflagefläche für Produkte P (s. Figur 2), um die Produkte durch Rotation der ersten Welle A in eine zur ersten Richtung X orthogonalen zweiten Richtung Y zu fördern. Der oben liegende Abschnitt des Transportmediums R bildet das Obertrum T. Wie aus Figur 2 ersichtlich ist bildet das Obertrum T einen Teil eines Förderweges, entlang dessen einzelne Produkte P (im Figurenbeispiel von rechts nach links) über die Transportvorrichtung hinweg förderbar sind.

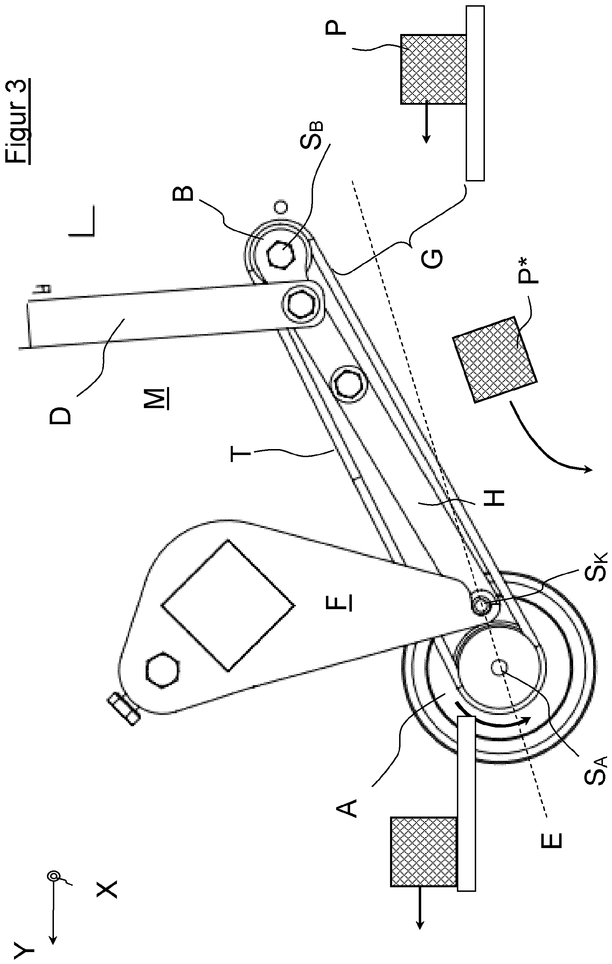

Parallel zur ersten Achse S_{A} erstreckt sich eine ortsfeste Schwenkachse S_{K}, um welche die zweite Welle B aus einer unteren Schwenklage U in eine obere Schwenklage O und zurück verschwenkbar ist. Dazu ist die zweite Welle B drehbar in einer Halterung H aufgenommen, die sich von der zweiten Welle B bis zur Schwenkachse S_{K} erstreckt. Ein mit einem nicht näher dargestellten Schwenkantrieb verbundener Bügel D greift dazu an der Halterung H an. Der Bügel ist so bewegbar, dass sich die Halterung H und mit ihr die zweite Welle B aus der unteren Schwenklage U um die Schwenkachse S_{K} in die obere Schwenklage O bewegt (Siehe hierzu auch Fig. 3). Der um die zweite Welle B herumgeführte Abschnitt des Transportmediums R folgt dieser Schwenkbewegung, sodass sich im Förderweg ein Sortierspalt G auftut, durch welchen auszuschleusende Produkte P aussortiert werden können.

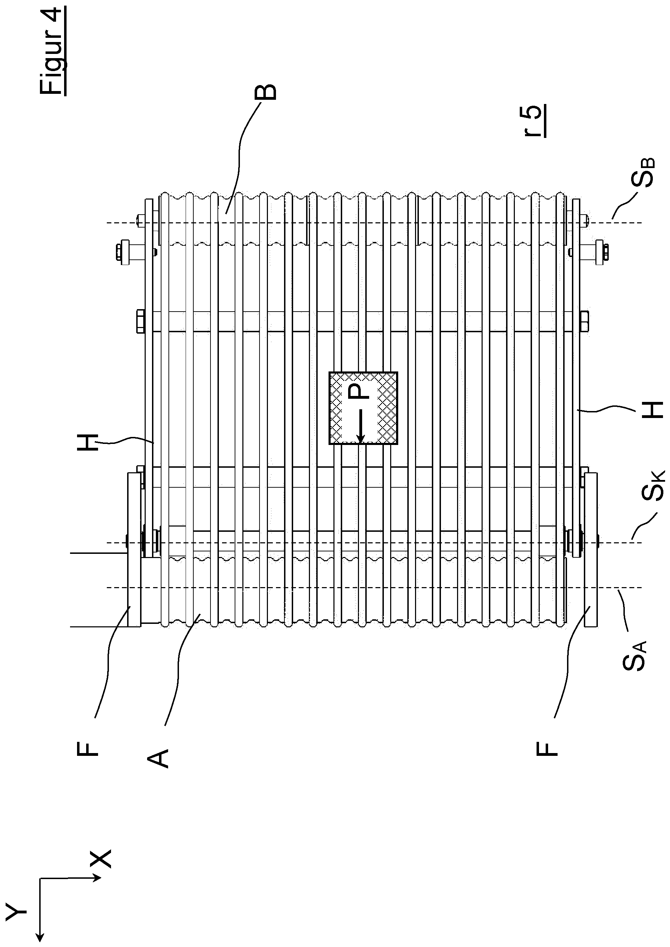

Die Halterung H ist drehfest mit einem entlang der Schwenkachse S_{K} ausgebildeten Schwenkachsenkörper K_{K} verbunden, der insbesondere in der Draufsicht gemäß Figur 4 zu sehen ist. Der Schwenkachsenkörper K_{K} ist über eine nicht näher dargestellte Lagerbuchse drehbar um einen Achsenstab gelagert, der seinerseits drehfest in zwei ortsfest mit dem Grundkörper M verbundenen Achsenaufnahmen F angeordnet ist.

Die Achsenaufnahmen F werden gebildet durch zwei Wangen, beispielsweise in Form zweier flacher Stützbleche, die sich mit einem Eingriffsprofil entlang eines dazu komplementär ausgebildeten ortsfesten Holmes L in X-Richtung verschieben und arretieren lassen. Der Holm L ist an dem nicht näher dargestellten Grundkörper M angeordnet und kragt von dort in X-Richtung frei hervor. Er liegt dabei ausreichend weit oberhalb des Förderweges, so dass der Produkttransport oder das Verschwenken in die obere Schwenklage O nicht behindert wird.

Die Schwenkachse S_{K} wird von dem Transportmedium R umlaufen, liegt also zwischen dem Obertrum T und dem Untertrum sowie zwischen den beiden Wellen A und B. Der Durchmesser des Schwenkachsenkörpers K_{K} ist deutlich kleiner gewählt als der Durchmesser der ersten Welle A. Zugleich ist der Abstand y_{A} der Schwenkachse S_{K} zur ersten Achse S_{A} deutlich geringer als der Abstand y_{B} der Schwenkachse S_{K} zur zweiten Achse S_{B}. Durch diese beiden Eigenschaften des Schwenkachsenkörpers ist es möglich, die zweite Welle B über einen relativ großen Schwenkwinkel α zwischen den beiden Schwenklagen U, O zu verschwenken, ohne dass der Schwenkachsenkörper K_{K} dabei das Obertrum T berührt oder gar umgelenkt.

Figur 2 zeigt die erfindungsgemäße Sortiervorrichtung in der unteren Schwenklage U. Die von rechts zugeführten Produkte P gelangen im Bereich der zweiten Welle B entlang eines Förderweges auf das Transportmedium R und werden entlang der Oberseite des Obertrums T zur ersten Welle A transportiert, wo sie von einer nicht näher bezeichneten Vorrichtung übernommen und weiter gefördert werden. In der unteren Schwenklage U liegt der Schwenkachsenkörper K_{K} knapp unterhalb der Innenseite des Obertrums T, ohne dieses jedoch zu berühren. Die an dem Schwenkachsenkörper K_{K} angreifende Halterung H ist so gestaltet, dass sie in dieser unteren Schwenklage U mit einem Stützabschnitt an der nach unten gewandten Innenseite des Obertrum T reibungsarm anliegt, um das Obertrum T gegen darauf auf liegende Produkte P abzustützen.

Figur 3 zeigt die Sortiervorrichtung in der oberen Schwenklage O, die durch entsprechende Betätigung des Bügels D eingenommen wurde. Durch den dabei entstandenen Sortierspalt G können gezielt einzelne Produkte P* aus dem Produktstrom aussortiert werden.

Beim Verschwenken ändert sich die Position des Schwenkachsenkörpers K_{K} relativ zum Transportmedium R. Nun liegt der Schwenkachsenkörper vom Obertrum T weiter weg und relativ nahe am Untertrum, allerdings wieder unter Beibehaltung eines geringen Spaltes, um Abrieb zwischen dem Transportmedium R und dem Schwenkachsenkörper K_{K} auch in dieser Schwenklage zu vermeiden. Zugleich hat sich der durch die Halterung H gebildete Stützabschnitt von der Unterseite des Obertrums T gelöst.

Die erste Achse und die Schwenkachse S_{K} liegen ortsfest in einer gedachten Ebene E. Die Achse S_{B} der zweiten Welle B wandert während des Verschwenkens von einer in die andere Schwenklage O, U durch diese Ebene E hindurch, wobei der Abstand der ersten und zweiten Achse S_{A}, S_{B} am größten ist, wenn die zweite Achse S_{B} in der Ebene E liegt. Entsprechend ist die zwischen den beiden Wellen A, B durch das Transportmedium R erzeugte Vorspannkraft in diesem Moment maximal. Jenseits der Ebene E wird daher die zweite Welle B jeweils in Richtung auf eine der beiden Schwenklagen U, O gedrängt, um die Vorspannung zu reduzieren

Figur 4 zeigt Komponenten der erfindungsgemäßen Sortiervorrichtung in Draufsicht. Zu erkennen sind die sich jeweils in X-Richtung parallel zueinander erstreckenden Achsen S_{A}, S_{B} und S_{K}. mit den zugehörigen Wellen A, B und dem Schwenkachsenkörper K_{K}. Die Wellen A, B sind profiliert und zur Aufnahme parallel zueinander verlaufender und gemeinsam ein Transportmedium ausbildender Riemen vorgesehen, welche gemeinsam eine Auflagefläche für zu transportierenden Produkte P bilden. Der Schwenkachsenkörper K_{K} erstreckt sich über die ganze X-Breite der Transportvorrichtung zwischen dem Transportmedium R hindurch und wird an seinen beiden Enden von der Halterung H aufgenommen. Er ist drehbar in den beiden wangenartigen Achsenaufnahmen F gelagert, die ihrerseits an dem in Figur 4 nicht dargestellten ortsfesten Holm L befestigt sind.

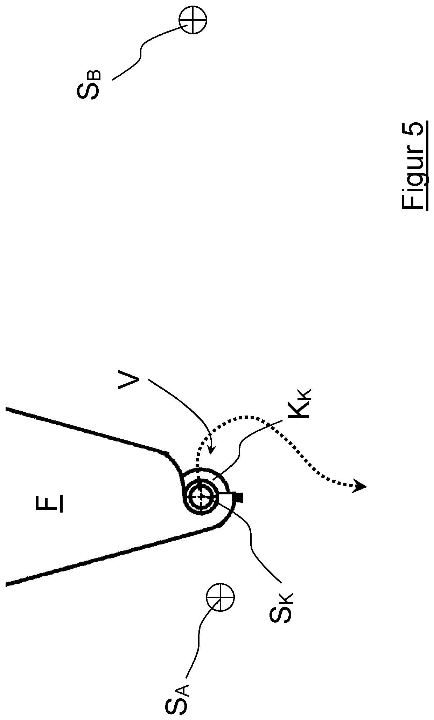

Die erfindungsgemäße Vorrichtung ist leicht zu demontieren. Dazu ist vorgesehen, dass die Achsenaufnahme F Vertiefungen V zur Aufnahme des Schwenkachsenkörpers K_{K} bzw. seiner Lagerelemente aufweist, wie dies in Figur 5 beispielhaft dargestellt ist. In jeder Wange der Achsenaufnahme F ist eine Ausnehmung V in Gestalt einer halbkreisförmigen Vertiefung vorgesehen, die zu ihrer von der ersten Achse S_{A} abgewandten Seite hin offen ist (die beiden Achsen S_{A}, S_{B} sind hier nur schematisch dargestellt). Über die im Transportmedium herrschende Vorspannkraft, die auf die zweite Welle B und deren Halterung H einwirkt, wird der Schwenkachsenkörper K_{K} in Richtung auf die erste Achse S_{A} und damit in die Vertiefungen V hinein gedrängt. Bei ausreichend großer Vorspannung kann der Schwenkachsenkörper die Ausnehmung V daher nicht selbsttätig verlassen, und in Verbindung mit dem an der Halterung H angreifenden Bügel D wird der Schwenkachsenkörper K_{K} im Betrieb sicher in den Vertiefungen V gehalten.

Unter Überwindung der Vorspannkraft, also indem der Schwenkachsenkörper K_{K} in Richtung auf die zweite Welle B zubewegt wird, lässt er sich aus den Vertiefungen V herausheben und damit von den ortsfesten Achsenaufnahmen F trennen, beispielsweise entlang der gepunkteten Linie in Figur 54. Wird zuvor auch der Bügel von der Halterung H oder von dem nicht dargestellten Schwenkantrieb (vorzugsweise werkzeuglos) gelöst, dann lässt sich das aus Schwenkachsenkörper K_{K}, Halterung H, zweiter Welle B und gegebenenfalls dem Bügel D gebildete Modul mit seinem Transportmedium R von dem Grundkörper M bzw. von der Antriebswelle A lösen. Da die Antriebswelle A frei hervorkragt, wird die Entnahme des Transportmediums (oder auch nur einzelner Teile bzw. Riemen davon) durch keine weiteren Anbauten blockiert und kann entsprechend schnell erfolgen.

Vorteilhafter Weise können auch mehrere der vorgenannten Module in X-Richtung hintereinander angeordnet werden und dadurch eine Sortieranlage in Form eines mehrspurigen Systems ausbilden. Die Welle A kann dann allen Modulen als gemeinsame Antriebswelle A' dienen, während sich die jeweilige zweite Welle B jedes einzelnen Moduls unabhängig von den benachbarten Modulen in die eine oder andere Schwenklage O, U bewegen lässt (wobei jeweils ein Schwenkantrieb pro Modul vorzusehen ist).

### Bezugszeichen

- α: Schwenkwinkel
- A: erste Welle
- A': erste (gemeinsame) Welle
- B: zweite Welle
- D: Bügel
- E: Ebene
- F: Achsenaufnahme
- G: Sortierspalt
- H: Halterung
- K_{K}: Schwenkachsenkörper
- L: Holm
- M: Grundkörper
- O: obere Schwenklage
- P: Produkt
- R: Transportmedium
- S_{A}: erste Achse
- S_{B}: zweite Achse
- T: Obertrum
- U: untere Schwenklage
- V: Vertiefung
- X, Y: Raumrichtungen
- y_{A}: Abstand erste Achse S_{A} zur Schwenkachse S_{K}
- y_{B}: Abstand zweite Achse S_{B} zur Schwenkachse S_{K}

## Patentansprüche

1. Sortiervorrichtung zum Sortieren bewegter Produkte (P),
a) umfassend eine erste, ortsfeste Welle (A), die sich entlang einer ersten Achse (S_{A}) in einer vorzugsweise horizontalen Achsrichtung (X) erstreckt, und
b) ferner umfassend eine zweite Welle (B), die zur ersten Welle (A) beabstandet ist und sich entlang einer zur Achse (S_{A}) parallelen Achse (S_{B}) erstreckt,
c) wobei ein Endlos-Transportmedium (R) um die erste Welle (A) und die zweite Welle (B) gelegt ist und dabei ein Obertrum (T) zur Auflage und zur Förderung von Produkten (P) ausbildet,
d) wobei die zweite Welle (B) aus einer unteren Schwenklage (U) um eine ortsfeste Schwenkachse (S_{K}) in eine obere Schwenklage (O) und zurück verschwenkbar ist,
**dadurch gekennzeichnet,**
e) dass die Schwenkachse (S_{K}) von der ersten Achse (S_{A}) beabstandet und parallel zu dieser angeordnet ist, und
f) dass das Obertrum (T) in beiden Schwenklagen (O, U) gerade ist.

2. Sortiervorrichtung nach Anspruch 1, **dadurch gekennzeichnet, dass** das Transportmedium (R) ein von der zweiten Welle (B) zur ersten Welle (A) führendes, dem Obertrum (T) gegenüberliegendes Untertrum (K), ausbildet, welches in beiden Schwenklagen (O, U) gerade ist.

3. Sortiervorrichtung nach Anspruch 1 oder 2, **dadurch gekennzeichnet, dass** die Schwenkachse (S_{K}) vom Transportmedium (R) umlaufen wird.

4. Sortiervorrichtung nach einem der vorherigen Ansprüche, **dadurch gekennzeichnet, dass** die Schwenkachse (S_{K}) zur erstens Achse (S_{A}) einen Abstand (y_{A}) und zur zweiten Achse (S_{B}) einen Abstand (y_{B}) aufweist, wobei gilt y_{A} < y_{B}, vorzugsweise y_{A} < 0.2 · y_{B}.

5. Sortiervorrichtung nach einem der vorherigen Ansprüche, **dadurch gekennzeichnet, dass** um die Schwenkachse (S_{K}) ein Schwenkachsenkörper (K_{K}) ausgebildet ist, wobei in beiden Schwenklagen (O, U) ein über die gesamte Breite des Obertrums (T) in X-Richtung verlaufender freier Spalt zwischen dem Schwenkachsenkörper (K_{K}) und dem Obertrum (T) besteht.

6. Sortiervorrichtung nach einem der vorherigen Ansprüche, **dadurch gekennzeichnet, dass** sich eine in ihrer Längsrichtung elastische oder steife Wellenhalterung (H) von der Schwenkachse (S_{K}) zur zweiten Welle (B) erstreckt, um die zweite Welle (B) auf einem Kreisbahnabschnitt um die Schwenkachse (S_{K}) zu führen.

7. Sortiervorrichtung nach einem der vorherigen Ansprüche, **dadurch gekennzeichnet, dass** ein die Schwenkachse (S_{K}) ausbildender Schwenkachsenkörper (K_{K}) lösbar in zu beiden Seiten des Transportmediums (R) angeordnete, ortsfeste Achsenaufnahmen (F) einsetzbar ist.

8. Sortiervorrichtung nach dem vorhergehenden Anspruch, **dadurch gekennzeichnet, dass** der Schwenkachsenkörper (K_{K}) in den Achsenaufnahmen (F) vorspannbar ist, indem das Transportmedium (R) mit einer durch Dehnung erzeugten Vorspannkraft um die erste und zweite Welle (A, B) gelegt ist und die zweite Welle (B) die Vorspannkraft über eine Wellenhalterung (H) in den Schwenkachsenkörper (K_{K}) einleitet.

9. Sortiervorrichtung nach einem der beiden vorhergehenden Ansprüche, **dadurch gekennzeichnet, dass** wenigstens eine Achsenaufnahme (F) von der ersten Welle (A) fortweisende Vertiefungen (V) aufweist, in welche jeweils ein Abschnitt des Schwenkachsenkörpers (K_{K}) zu dessen Montage einsetzbar ist, und der Schwenkachsenkörper (K_{K}) zur Demontage unter Überwindung der Vorspannkraft entlang der Vertiefungen aus der Achsenaufnahme (F) herausnehmbar ist.

10. Sortiervorrichtung nach einem der vorhergehenden Ansprüche, **dadurch gekennzeichnet, dass** die erste Welle (A)
a) eine Antriebswelle ist, um das Transportmedium (R) zum Umlauf um die Wellen (A, B) anzutreiben, während die zweite Welle (B) eine antriebslose Umlenkwelle ist, und/oder
b) nur einseitig an einem axialen Ende an einem Grundkörper (M) angeordnet ist und von diesem frei hervorkragt, und/oder
c) zu einem die Schwenkachse (S_{K}) ausbildenden Schwenkachsenkörper (K_{K}) durch einen Spalt beabstandet ist.

11. Sortiervorrichtung nach einem der vorhergehenden Ansprüche, **dadurch gekennzeichnet, dass** die erste Achse (S_{A}) mit der Schwenkachse (S_{K}) eine Ebene (E) definiert und sich die zweite Achse (S_{B}) während des Übergangs von einer in die andere Schwenklage (O, U) durch diese Ebene (E) hindurchbewegt.

12. Sortiervorrichtung nach dem vorhergehenden Anspruch, **dadurch gekennzeichnet, dass** eine vom Transportmedium (R) erzeugte Vorspannkraft zwischen erster und zweiter Welle (A, B) maximal ist wenn die zweite Achse (S_{B}) in der Ebene (E) liegt, so dass die zweite Welle (B) jenseits der Ebene (E) zum Abbau der Vorspannkraft von der Ebene (E) fort bzw. in Richtung auf eine der beiden Schwenklagen (O, U) gedrängt wird.

13. Sortieranlage, umfassend mehrere Sortiervorrichtungen der vorgenannten Ansprüche mit der Maßgabe, dass eine Antriebswelle (A') wenigstens zwei, vorzugsweise allen in X-Richtung hintereinander angeordneten Sortiervorrichtungen als gemeinsame erste Welle (A) dient.

## Claims

1. Sorting device for sorting moving products (P),
a) comprising a first, stationary shaft (A) which extends along a first axis (S_{A}) in a preferably horizontal axial direction (X), and
b) further comprising a second shaft (B) which is spaced from the first shaft (A) and extends along an axis (S_{B}) which is in parallel with the axis (S_{A}),
c) a continuous transport medium (R) being placed around the first shaft (A) and the second shaft (B) and thereby forming an upper strand (T) for supporting and conveying products (P),
d) it being possible for the second shaft (B) to be pivoted from a bottom pivot position (U) about a stationary pivot axis (S_{K}) into a top pivot position (O) and back,
**characterized in that**
e) the pivot axis (S_{K}) is spaced from and arranged in parallel with the first axis (S_{A}), and
f) the upper strand (T) is straight in both pivot positions (O, U).

2. Sorting device according to claim 1, **characterized in that** the transport medium (R) forms a lower strand (K) which leads from the second shaft (B) to the first shaft (A), is opposite the upper strand (T) and is straight in both pivot positions (O, U).

3. Sorting device according to either claim 1 or claim 2, **characterized in that** the transport medium (R) revolves about the pivot axis (S_{K}).

4. Sorting device according to any of the preceding claims, **characterized in that** the pivot axis (S_{K}) is at a distance (y_{A}) from the first axis (S_{A}) and at a distance (y_{B}) from the second axis (SB), where y_{A} < y_{B}, preferably y_{A} < 0.2·y_{B}.

5. Sorting device according to any of the preceding claims, **characterized in that** a pivot axis body (K_{K}) is formed about the pivot axis (S_{K}), there being, in both pivot positions (O, U), a free gap which extends over the entire width of the upper strand (T) in the X direction between the pivot axis body (K_{K}) and the upper strand (T).

6. Sorting device according to any of the preceding claims, **characterized in that** a shaft mount (H) which is resilient or rigid in its longitudinal direction extends from the pivot axis (S_{K}) to the second shaft (B) in order to guide the second shaft (B) on a circular path portion about the pivot axis (S_{K}).

7. Sorting device according to any of the preceding claims, **characterized in that** a pivot axis body (K_{K}) which forms the pivot axis (S_{K}) can be detachably inserted into stationary axis receptacles (F) arranged on both sides of the transport medium (R).

8. Sorting device according to the preceding claim, **characterized in that** the pivot axis body (K_{K}) can be preloaded in the axis receptacles (F) by the transport medium (R) being placed around the first and the second shaft (A, B) with a preload generated by stretching, and the second shaft (B) introduces the preload into the pivot axis body (K_{K}) via a shaft mount (H).

9. Sorting device according to either of the two preceding claims, **characterized in that** at least one axis receptacle (F) has recesses (V) which point away from the first shaft (A), into which recesses a portion of the pivot axis body (K_{K}) can be inserted in order to be assembled, and the pivot axis body (K_{K}) can be removed from the axis receptacle (F) in order to be disassembled by overcoming the preload along the recesses.

10. Sorting device according to any of the preceding claims, **characterized in that** the first shaft (A)
a) is a drive shaft for driving the transport medium (R) so that it revolves around the shafts (A, B), while the second shaft (B) is a non-driven deflection shaft, and/or
b) is arranged only on one side of an axial end on a main body (M) and protrudes freely therefrom, and/or
c) is spaced from a pivot axis body (S_{K}) which forms the pivot axis (K_{K}) by means of a gap.

11. Sorting device according to any of the preceding claims, **characterized in that** the first axis (S_{A}) defines a plane (E) with the pivot axis (S_{K}) and the second axis (S_{B}) moves through this plane (E) during the transition from one pivot position to the other (O, U).

12. Sorting device according to the preceding claim, **characterized in that** a preload generated by the transport medium (R) between the first and the second shaft (A, B) is at its maximum when the second axis (S_{B}) lies in the plane (E), so that the second shaft (B) beyond the plane (E) is pushed away from the plane (E) or in the direction of one of the two pivot positions (O, U) in order to reduce the preload.

13. Sorting system comprising a plurality of sorting devices according to the above claims, provided that a drive shaft (A') is used as a common first shaft (A) for at least two, preferably all sorting devices arranged one behind the other in the X direction.

## Revendications

1. Dispositif de tri permettant de trier des produits (P) en mouvement,
a) comprenant un premier arbre (A) fixe qui s'étend le long d'un premier axe (S_{A}) dans une direction d'axe (X) de préférence horizontale, et
b) comprenant en outre un second arbre (B) espacé du premier arbre (A) et s'étendant le long d'un axe (S_{B}) parallèle à l'axe (S_{A}),
c) dans lequel un moyen de transport (R) sans fin est placé autour du premier arbre (A) et du second arbre (B) et forme ainsi un parcours supérieur (T) permettant de supporter et de transporter des produits (P),
d) dans lequel le second arbre (B) peut être pivoté d'une position de pivotement inférieure (U) à une position de pivotement supérieure (O) autour d'un axe de pivotement (S_{K}) fixe et inversement,
caractérisé en ce
e) que l'axe de pivotement (S_{K}) est espacé de et parallèle au premier axe (S_{A}), et
f) que le parcours supérieur (T) est rectiligne dans les deux positions de pivotement (O, U).

2. Dispositif de tri selon la revendication 1, **caractérisé en ce que** le moyen de transport (R) forme un parcours inférieur (K) s'étendant du second arbre (B) au premier arbre (A) et opposé au parcours supérieur (T), lequel parcours inférieur est rectiligne dans les deux positions de pivotement (O, U).

3. Dispositif de tri selon la revendication 1 ou 2, **caractérisé en ce que** l'axe de pivotement (S_{K}) est entouré par le moyen de transport (R).

4. Dispositif de tri selon l'une des revendications précédentes, **caractérisé en ce que** l'axe de pivotement (S_{K}) présente une distance (y_{A}) par rapport au premier axe (S_{A}) et une distance (y_{B}) par rapport au second axe (SB), avec y_{A} < y_{B}, de préférence avec y_{A} < 0,2·y_{B}.

5. Dispositif de tri selon l'une des revendications précédentes, **caractérisé en ce qu'**un corps d'axe de pivotement (K_{K}) est formé autour de l'axe de pivotement (S_{K}), un espace libre entre le corps d'axe de pivotement (K_{K}) et le parcours supérieur (T) et s'étendant sur toute la largeur du parcours supérieur (T) dans la direction X étant situé dans les deux positions de pivotement (O, U).

6. Dispositif de tri selon l'une des revendications précédentes, **caractérisé en ce qu'**un support d'arbre (H) élastique ou rigide dans sa direction longitudinale s'étend de l'axe de pivotement (S_{K}) au second arbre (B) afin de conduire le second arbre (B) sur une section de trajectoire circulaire autour de l'axe de pivotement (S_{K}).

7. Dispositif de tri selon l'une des revendications précédentes, **caractérisé en ce qu'**un corps d'axe de pivotement (K_{K}) formant l'axe de pivotement (S_{K}) peut être inséré de manière amovible dans des logements d'axe (F) fixes disposés des deux côtés du moyen de transport (R).

8. Dispositif de tri selon la revendication précédente, **caractérisé en ce que** le corps d'axe de pivotement (K_{K}) peut être précontraint dans les logements d'axe (F) par la mise en place du moyen de transport (R) autour des premier et second arbres (A, B) avec une force de précontrainte générée par étirement et par l'introduction de la force de précontrainte par le second arbre (B) dans le corps d'axe de pivotement (K_{K}) par l'intermédiaire d'un support d'arbre (H).

9. Dispositif de tri selon l'une des deux revendications précédentes, **caractérisé en ce qu'**au moins un logement d'axe (F) présente des évidements (V) s'éloignant du premier arbre (A), dans lesquels respectivement une section du corps d'axe de pivotement (K_{K}) peut être insérée pour son montage, et le corps d'axe de pivotement (K_{K}) peut être retiré du logement d'axe (F) pour le démontage en dépassant la force de précontrainte le long des évidements.

10. Dispositif de tri selon l'une des revendications précédentes, **caractérisé en ce que** le premier arbre (A)
a) est un arbre d'entraînement afin d'entraîner le moyen de transport (R) pour qu'il tourne autour des arbres (A, B), tandis que le second arbre (B) est un arbre de renvoi non entraîné, et/ou
b) est disposé d'un seul côté au niveau d'une extrémité axiale sur un corps de base (M) et fait saillie librement depuis celui-ci, et/ou
c) est espacé d'un corps d'axe de pivotement (K_{K}) formant l'axe de pivotement (S_{K}) par un espace.

11. Dispositif de tri selon l'une des revendications précédentes, **caractérisé en ce que** le premier axe (S_{A}) définit un plan (E) avec l'axe de pivotement (S_{K}) et le second axe (S_{B}) traverse ledit plan (E) lors du passage d'une position de pivotement (O, U) à une autre.

12. Dispositif de tri selon la revendication précédente, **caractérisé en ce qu'**une force de précontrainte générée par le moyen de transport (R) est à son maximum entre le premier et le second arbres (A, B) lorsque le second axe (S_{B}) se trouve dans le plan (E), de sorte que le second arbre (B) est repoussé hors du plan (E) ou en direction de l'une des deux positions de pivotement (O, U) afin de réduire la force de précontrainte.

13. Système de tri comprenant plusieurs dispositifs de tri selon les revendications précédentes, à condition qu'un arbre d'entraînement (A') serve de premier arbre commun (A) pour au moins deux, de préférence pour tous les dispositifs de tri disposés les uns derrière les autres dans la direction X.
